(19) Europäisches Patentamt / European Patent Office / Office européen des brevets

(11) **EP 2 700 468 A1**

(12) **DEMANDE DE BREVET EUROPEEN**

(43) Date de publication:
**26.02.2014 Bulletin 2014/09**

(51) Int Cl.:
**B23K 11/30** *(2006.01)*

(21) Numéro de dépôt: **13305969.1**

(22) Date de dépôt: **08.07.2013**

| | |
|---|---|
| (84) Etats contractants désignés:<br>**AL AT BE BG CH CY CZ DE DK EE ES FI FR GB GR HR HU IE IS IT LI LT LU LV MC MK MT NL NO PL PT RO RS SE SI SK SM TR**<br>Etats d'extension désignés:<br>**BA ME**<br><br>(30) Priorité: **20.08.2012 FR 1257869** | (71) Demandeur: **A.M.D.P.**<br>**78290 Croissy sur Seine (FR)**<br><br>(72) Inventeur: **Celier, Alexandre**<br>**75017 PARIS (FR)**<br><br>(74) Mandataire: **Mazabraud, Xavier**<br>**Cabinet Moutard**<br>**35, rue de la Paroisse**<br>**78000 Versailles (FR)** |

(54) **Dispositif pour extraire une électrode d'une pince à souder**

(57) L'invention concerne un dispositif d'extraction d'une électrode d'une pince à souder, ladite électrode étant fixée à une allonge d'extrémité d'une mâchoire de la pince, du type comportant au moins un moyen de prise comportant deux surfaces d'appui, une première surface d'appui prévue pour s'appliquer sur la base de ladite électrode et une seconde surface d'appui prévue pour s'appliquer sur un épaulement de ladite allonge, dans lequel le moyen de prise est galet d'extraction (20a, 20b) monté rotatif et comportant une rampe annulaire (23a, 23b) en périphérie dudit galet, et dans lequel la première surface d'appui est une surface hélicoïdale (25a, 25b) et ladite seconde surface d'appui est une surface radiale plane de ladite rampe.

FIG. 3

EP 2 700 468 A1

**Description**

L'invention se situe dans le domaine du soudage par point. Elle concerne plus particulièrement un dispositif pour extraire une électrode usagée de l'allonge de la mâchoire d'une pince à souder.

La soudure par point est une méthode de soudage utilisant le principe de la soudure par résistance à électrode non fusible dans laquelle on combine une élévation de température pour obtenir le point de fusion du métal et une forte pression mécanique. La soudure par point est largement utilisée pour assembler des tôles entre elles, en construction automobile notamment, car la brièveté de l'opération et la localisation précise du point de soudure entre les électrodes limitent la déformation des tôles lors de la soudure.

Une électrode de cuivre est située aux extrémités des mâchoires d'une pince à souder. Cette électrode est emmanchée à force et maintenue par friction sur un porte-électrode conducteur à l'extrémité de la mâchoire appelé allonge. Lorsque la pince est refermée sur l'emplacement à souder, elle applique fortement les pièces métalliques à souder l'une sur l'autre, puis un courant de très forte intensité (typiquement 12 000 A) est envoyé pendant un temps très bref au travers des pièces à souder. Le court-circuit électrique au point de contact des deux pièces métalliques créé la fusion du métal et la soudure.

Les électrodes ont globalement la forme de dés à coudre, présentant donc une première extrémité arrondie. La surface de point de contact est très faible, de l'ordre du mm$^2$. La seconde extrémité constitue la base circulaire de l'électrode. De son côté, l'allonge comporte une pointe sur laquelle est emmanchée l'électrode et un épaulement sous cette pointe, de sorte qu'il existe une gorge entre la base de l'électrode et l'épaulement de l'allonge.

La qualité de la soudure dépend fortement d'un certain nombre de paramètres, notamment de l'intensité du courant qui s'établit entre les électrodes et les pièces à souder. Une intensité trop faible conduit à une mauvaise soudure (« collage »), une intensité trop forte perce les tôles. Or la première extrémité des électrodes en cuivre se déforme progressivement (par exemple elle peut s'aplatir et la surface de contact augmenter) ce qui provoque une modification progressive de l'intensité de soudage. Pour corriger ce phénomène, il faut périodiquement retailler ou roder l'extrémité des électrodes, par exemple tous les 200 ou 400 points de soudure. Tous les 20 à 40 rodages, les électrodes ne sont plus utilisables et il convient de les remplacer par des électrodes neuves. L'extraction des électrodes usagées est délicate car elles sont maintenues fermement sur leur allonge et il convient de ne pas déformer ou casser cette allonge.

Différents dispositifs ont été proposés à cet effet. De FR 2 870 149 on connaît un dispositif comportant des modules d'extraction rotatifs, lesdits modules d'extraction comportant trois mors d'extraction dont une première extrémité suit un profil de came et une seconde extrémité se referme sur la gorge située entre la base de l'électrode et l'épaulement de l'allonge en vue de l'extraction de l'électrode.

De FR 2 921 855 on connaît un dispositif comportant un éperon comportant une surface crantée, cette surface crantée étant appliquée par translation de l'éperon sur la surface externe de l'électrode ; le dispositif comporte également des galets de contre-appui coniques pour l'électrode. L'électrode est extraite par une combinaison de mouvement de rotation communiqué par la surface crantée et de translation communiqué par les galets coniques.

On connaît également un dispositif pneumatique d'extraction d'électrode comportant deux fourchettes prenant place dans la gorge et aptes à se déplacer en sens inverse : l'une des fourchettes prend appui sur l'épaulement de l'allonge, l'autre sur la base de l'électrode.

L'invention vise à proposer une alternative plus simple et plus économique. A cet effet elle propose un dispositif d'extraction d'une électrode d'une pince à souder, ladite électrode étant fixée à une allonge d'extrémité d'une mâchoire de la pince, du type comportant au moins un moyen de prise comportant deux surfaces d'appui, une première surface d'appui prévue pour s'appliquer sur la base de ladite électrode et une seconde surface d'appui prévue pour s'appliquer sur un épaulement de ladite allonge, dans lequel le moyen de prise est galet d'extraction monté rotatif et comportant une rampe annulaire en périphérie du galet, et en ce que la première surface d'appui est une surface hélicoïdale et la seconde surface d'appui est une surface radiale plane de la rampe.

Dans l'invention, le moyen de prise sur l'électrode est un galet comportant une excroissance annulaire sur une surface cylindrique, qui présente la forme d'une rampe. Cette rampe est comprise entre deux surface radiales, une surface de came hélicoïdale et une surface annulaire plane, de sorte que sur 360° autour de l'axe du galet, l'épaisseur de cette rampe varie d'une valeur minimum jusqu'à une valeur maximum définies plus loin. Cette rampe est prévue pour s'insérer dans la gorge entre la base de l'électrode et l'épaulement de l'allonge, la surface de came hélicoïdale s'appliquant sur la base de l'électrode ; elle convertit le mouvement de rotation du galet en mouvement de translation de l'électrode parallèle à l'axe des galets d'extraction, ce qui provoque sa séparation de l'allonge. La seconde surface d'appui s'applique sur l'épaulement de l'allonge, de sorte que la rampe agit comme un coin glissant entre l'électrode et l'allonge et que cette dernière ne supporte aucun effort du fait de l'extraction de l'électrode.

Avantageusement, la rampe annulaire peut comporter une encoche sur sa périphérie, à proximité de l'emplacement de la rampe où elle est la plus mince.

Le franchissement de cette encoche par l'électrode permet de positionner la gorge au niveau de la rampe à l'endroit où elle est la plus mince. Lorsque le galet est mis en rotation, la rampe s'insère dans la gorge.

Avantageusement, le dispositif peut comporter au moins deux galets d'extraction d'axes parallèles et dont les secondes surfaces d'appui sont situées dans un même plan.

Le fait de disposer au moins deux galets d'extraction en vis-à-vis de part et d'autre d'une direction d'introduction de l'électrode équilibre les efforts transversaux d'extraction.

Avantageusement, le dispositif peut comporter au moins une position de repos dans laquelle les encoches de chacun des galets d'extraction se font face.

Dans le cas où il y a deux galets d'extraction, chaque galet comportant une rampe, l'écartement entre les rampes est inférieur au diamètre de l'électrode. Pour que les rampes des deux galets d'extraction puissent prendre place dans la gorge entre la base de l'électrode et l'épaulement de l'allonge, il doit exister une position particulière dite « de repos » des galets d'extraction, dans laquelle les encoches se font face. Dans cette position, l'électrode peut s'insérer entre les deux galets d'extraction en franchissant les deux encoches.

De façon alternative, le dispositif peut comporter un galet d'extraction et au moins un galet de contre-appui d'axe parallèle à l'axe du galet d'extraction, prévu pour fournir un appui à l'électrode au moment de son extraction.

Dans un autre mode d'exécution, l'axe du/des galet(s) de contre-appui peut être orthogonal à l'axe du galet d'extraction.

Dans ces modes d'exécution, le dispositif ne comporte qu'un seul galet d'extraction, mais un ou plusieurs galets de contre-appui non motorisés sur lesquels l'électrode peut prendre appui, de façon à équilibrer les efforts transversaux d'extraction.

L'axe de ces galets de contre-appui peut être parallèle à l'axe du galet d'extraction, ou plus avantageusement, orthogonal à l'axe du galet d'extraction de façon à permettre à ces galets de contre-appui d'accompagner le mouvement d'insertion puis le mouvement d'extraction de l'électrode dans une direction parallèle à l'axe du galet d'extraction.

L'invention porte également sur un procédé d'extraction d'une électrode d'une pince à souder, ladite électrode étant fixée à une allonge d'extrémité d'une mâchoire de la pince faisant usage d'un dispositif selon l'invention, pouvant comporter les étapes suivantes :

- mettre les galets d'extraction en position de repos,
- engager entre lesdits galets d'extraction l'électrode à séparer de son allonge de façon qu'elle prenne place dans lesdites encoches, la gorge entre la base de l'électrode et un épaulement de l'allonge étant située au niveau desdites encoches,
- mettre en rotation lesdits galets de façon que les rampes annulaires respectives pénètrent dans la gorge, les surfaces radiales planes s'appliquant sur l'épaulement de ladite allonge et les surfaces hélicoïdales s'appliquant sur la base de ladite électrode.

Dans le cas d'un dispositif d'extraction ne comportant qu'un seul galet d'extraction, l'invention porte également sur un procédé d'extraction d'une électrode d'une pince à souder, ladite électrode étant fixée à une allonge d'extrémité d'une mâchoire de la pince faisant usage d'un dispositif selon l'invention, pouvant comporter les étapes suivantes :

- engager l'électrode à séparer de son allonge entre ledit galet d'extraction et au moins un galet de contre-appui de façon qu'elle prenne place dans l'encoche, la gorge entre la base de l'électrode et un épaulement de l'allonge étant située au niveau de ladite encoche,
- mettre en rotation ledit galet d'extraction de façon que la rampe annulaire pénètre dans la gorge, la surface radiale plane de la rampe s'appliquant sur l'épaulement de ladite allonge et la surface de came hélicoïdale s'appliquant sur la base de ladite électrode.

Des modes de réalisation et des variantes seront décrits ci-après, à titre d'exemples non limitatifs, avec référence aux dessins annexés dans lesquels :

La figure 1 représente schématiquement l'extrémité d'une pince pour soudure par point,

La figure 2 représente schématiquement en élévation une électrode montée sur une allonge,

La figure 3 représente schématiquement en perspective deux galets d'extraction,

Les figures 4A et 4B sont des vues schématiques du dessus du dispositif dans deux positions différentes des galets d'extraction, la figure 4C est une vue de détail de la figure 4B,

La figure 5 représente schématiquement une variante du dispositif comportant un seul galet d'extraction.

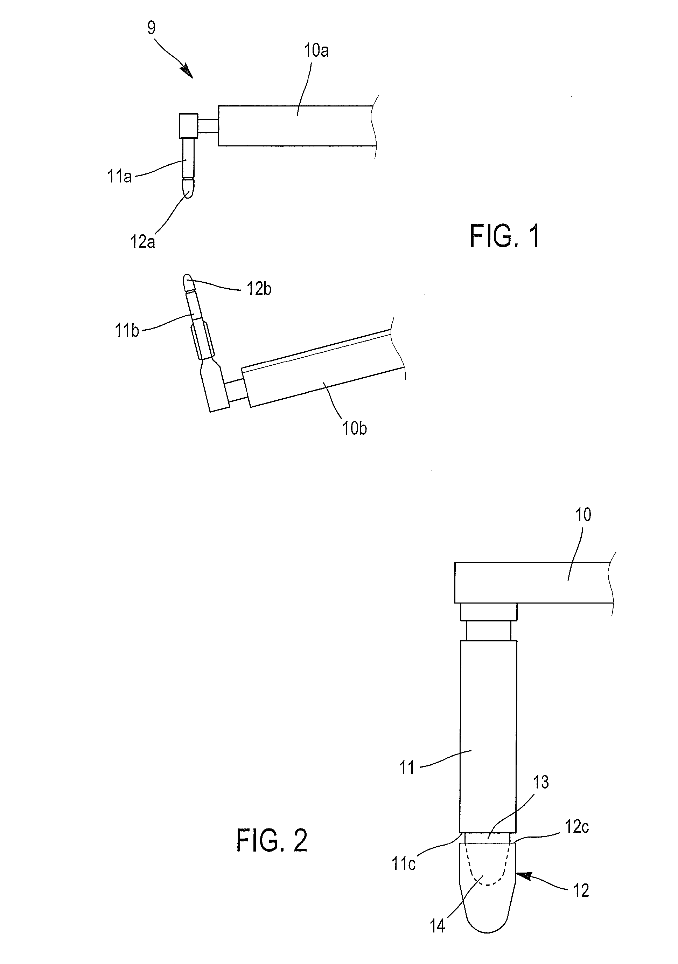

La figure 1 représente l'extrémité d'une pince 9 à soudure par point, comportant deux mâchoires 10a et 10b, reliées par un mécanisme (non représenté) tel qu'un robot de soudure permettant de refermer ces mâchoires en appliquant une force importante, pouvant atteindre 200 à 400 daN. Ces mâchoires sont prolongées par un porte-électrode ou allonge 11a, 11b, conformés de façon que, lors du serrage de la pince, ces allonges viennent sensiblement dans le prolongement l'une de l'autre. Chaque allonge porte une électrode 12a, 12b à son extrémité.

La figure 2 fournit un détail de l'extrémité d'une pince. On voit que l'allonge 11 est prolongée par une partie 14 de diamètre plus faible que l'allonge 11, définissant ainsi un épaulement 11c de l'allonge 11. Cette partie de plus faible diamètre s'engage à force dans une cavité de même forme pratiquée dans l'électrode 12. Cependant cette partie 14 de plus faible diamètre ne pénètre pas entièrement dans cette cavité, de sorte qu'entre l'épaulement 11c et la base 12c de l'électrode 12 s'étend une gorge annulaire 13. Pour extraire l'électrode 20, il convient de bloquer l'allonge 11 de façon à ne pas transmettre d'effort à la pince.

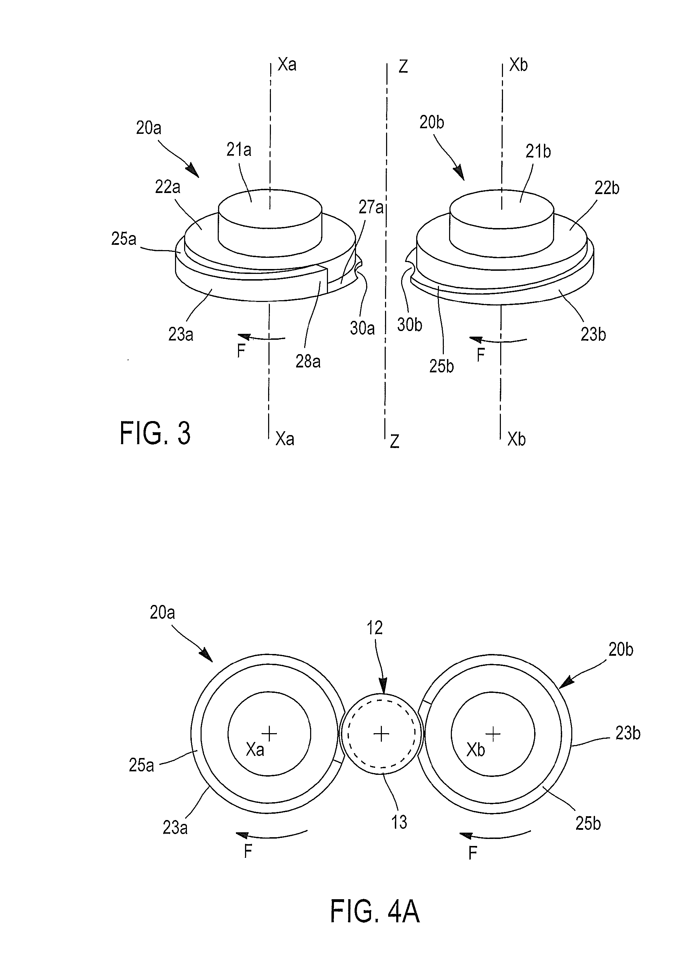

La figure 3 est une représentation en perspective schématique de deux galets d'extraction 20a, 20b d'un dispositif selon l'invention. Chaque galet est monté rotatif autour d'un axe respectif, Xa-Xa, Xb-Xb. Chaque galet comporte trois parties :

- Un plateau sommital 21a, 21b sensiblement cylindrique, destiné à porter ou à être fixé à un moyen d'entraînement du galet respectif, par exemple une roue dentée, elle-même entraînée par un moteur électrique avantageusement commun aux deux galets,
- Le corps du galet 22a, 22b proprement dit, de plus grand diamètre que le plateau sommital 21a, 21b, sensiblement cylindrique,
- Une rampe annulaire 23a, 23b qui s'étend en périphérie du corps de galet respectif ; cette rampe est comprise entre deux surfaces d'appui radiales, une première surface d'appui hélicoïdale 25a, 25b, et une seconde surface d'appui plane radiale 26a, 26b (située sur la face du galet opposée au plateau sommital 21a, 21b, non visible). A une première extrémité 27a de la surface d'appui hélicoïdale, l'épaisseur de la rampe est faible, inférieure ou égale à celle de la gorge 13, tandis qu'à sa seconde extrémité 28a l'épaisseur de la rampe est à son maximum, sensiblement égale à l'épaisseur du corps de galet 22a. Dans l'exemple illustré l'écart angulaire entre la première et la seconde extrémité de la surface hélicoïdale 25a est sensiblement égal à 360°, mais il pourrait être plus faible.

Les galets d'extraction 20a, 20b sont placés l'un par rapport à l'autre de façon que les secondes surfaces d'appui 26a, 26b soient coplanaires.

Chaque rampe est conçue pour prendre place dans une gorge 13 entre la base 12c d'une électrode 12 et l'épaulement 11c d'une allonge 11. A cet effet, une ouverture 30a, 30b est ménagée dans une rampe respective 23a, 23b au voisinage de la partie la plus mince de la rampe. Dans l'exemple illustré, cette ouverture présente la forme d'un secteur circulaire et sa profondeur est sensiblement égale à l'extension radiale de la rampe.

Lorsque ces ouvertures sont mises face à face dans une position dite « de repos » du dispositif, elles permettent d'engager une électrode 12 entre les galets 20a, 20b selon une direction Z-Z parallèle à celle des axes de rotation des galets. L'ensemble allonge - électrode est placée le long de cet axe de telle sorte que la gorge 13 se trouve au niveau des ouvertures 30a, 30b. Lorsque les galets 20a, 20b sont mis en rotation, les rampes 25a, 25b, compte tenu de leur faible épaisseur au voisinage des ouvertures 30a, 30b, s'engagent dans la gorge 13, la première surface d'appui hélicoïdale s'appliquant et glissant sur la base 12c de l'électrode et la seconde surface d'appui annulaire 26a, 26b s'appliquant et glissant sur l'épaulement 11c. L'épaisseur des rampes augmentant de façon identique avec l'angle de rotation, celles-ci exercent une pression sur la base de l'électrode 12 qui est ainsi désolidarisée de l'allonge 11, par exemple elle tombe sous son propre poids dans une caisse de récupération.

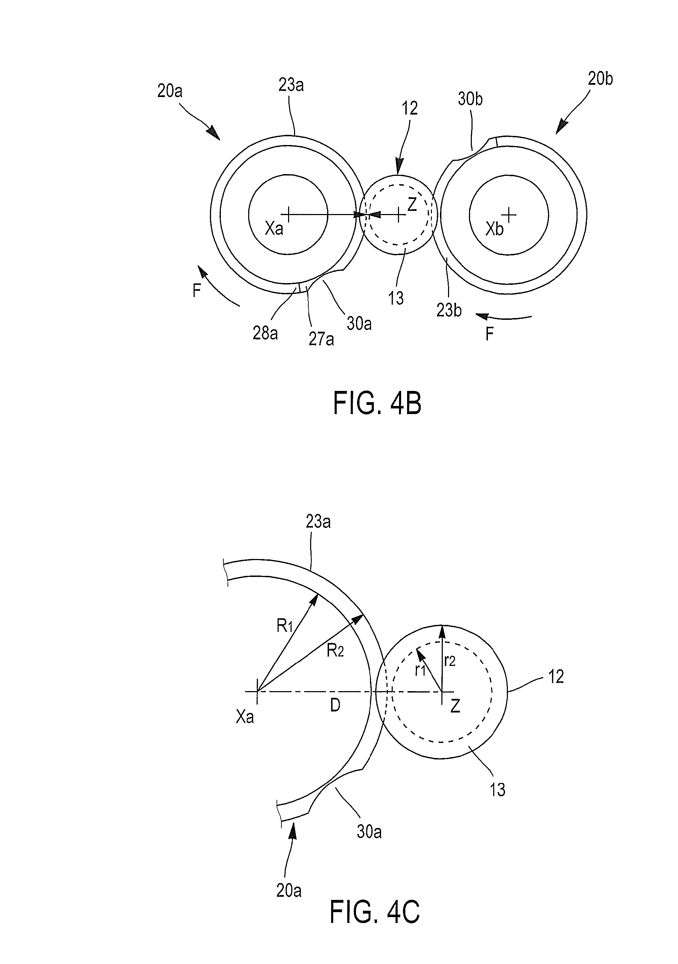

Les figures 4A et 4B illustrent le fonctionnement du dispositif. Dans la figure 4A, les galets d'extraction 20a et 20b sont en position « de repos » : les encoches 30a et 30b se font face. Une électrode 12 est engagée entre les galets 20a, 20b et occupe les encoches 30a et 30b. En figure 4B, les galets d'extraction ont tourné d'environ 60°, les rampes 23a, 23b sont engagées dans la gorge 13. L'épaisseur des rampes 23a, 23b croissant avec la position angulaire du point d'appui sur l'électrode, les surfaces d'appui hélicoïdales 25a, 25b exercent une force sur la base de l'électrode et celle-ci est désolidarisée de l'allonge 11. Les secondes surfaces d'appui 26a, 26b s'appliquent sur l'épaulement 11c de l'allonge 11, évitant ainsi que l'effort de traction soit transmis à l'allonge.

La figure 4C permet d'expliciter les conditions géométriques du fonctionnement du dispositif. On appelle :

- D la distance entre l'axe Xa du galet d'extraction 20a et l'axe Z de l'électrode,
- R2 l'extension radiale maximale du galet 20a compte tenu de la rampe 23a, R1 l'extension radiale du corps du galet 22a ; l'extension radiale de la rampe 23a est donc égale à R2 - R1,
- r1 le rayon du fond de la gorge 13 de l'électrode 12 et r2 le diamètre de l'électrode.

On voit que la coopération entre le galet 20a et l'électrode 12 impose les relations suivantes :

$$R2 + r1 < D$$

$$\text{et } R1 + r2 < D.$$

Dans l'exemple illustré, les galets 20a, 20b sont identiques et tournent dans le même sens, flèches F. Dans une variante, ils pourraient posséder une symétrie « en miroir » et tourner en sens inverse.

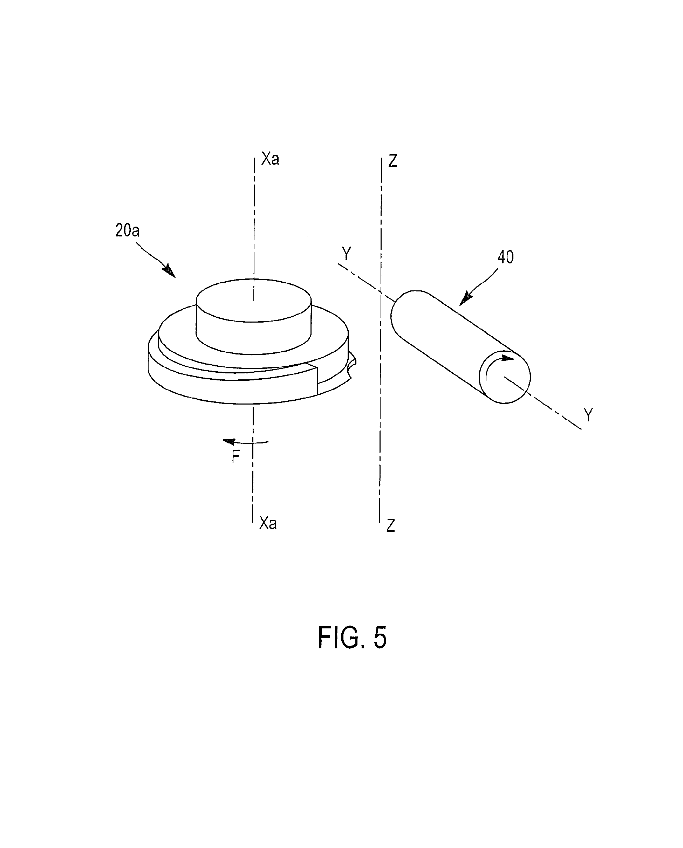

La figure 5 illustre une variante du dispositif ne comportant qu'un seul galet d'extraction 20a tel que déjà décrit. Il comporte en outre un galet de contre-appui 40 non motorisé, sous la forme d'un rouleau d'axe Y-Y orthogonal à celui Xa-Xa du galet 20a.

Comme précédemment, l'ensemble électrode - allonge s'engage selon une direction Z-Z parallèle à l'axe Xa-Xa du galet 20a, entre le galet 20a et le rouleau 40 ; l'électrode 12 entre alors en contact avec le rouleau 40. Lorsque le galet 20a est mis en rotation, le rouleau 40 accompagne le déplacement longitudinal de l'électrode et empêche que des efforts de flexion soient transmis à l'allonge 11.

D'autres modes de réalisation de cette variante sont par exemple :

- La présence de plus d'un seul rouleau 40, par exemple deux rouleaux dont les axes sont disposés à 120° l'un de l'autre,
- La présence d'un ou plusieurs galets de contre-appui cylindriques d'axes parallèles à l'axe Xa-Xa du galet d'extraction 20a.

Les galets d'extraction 20a, 20b et le cas échéant le/les galet(s) de contre-appui sont bien sûr solidaires d'un support (non représenté) comportant en outre le mécanisme d'entraînement des galets d'extraction, dont le moteur électrique. Ce support comporte par exemple une ouverture dans laquelle l'électrode à extraire est engagée lorsque les galets d'extraction sont en position « de repos ».

## Revendications

1. Dispositif d'extraction d'une électrode (12, 12a, 12b) d'une pince à souder (9), ladite électrode étant fixée à une allonge d'extrémité (11, 11a, 11b) d'une mâchoire de la pince, du type comportant au moins un moyen de prise comportant deux surfaces d'appui, une première surface d'appui prévue pour s'appliquer sur la base (12c) de ladite électrode et une seconde surface d'appui prévue pour s'appliquer sur un épaulement (11c) de ladite allonge, **caractérisé en ce que** ledit moyen de prise est galet d'extraction (20a, 20b) monté rotatif et comportant une rampe annulaire (23a, 23b) en périphérie dudit galet, et **en ce que** ladite première surface d'appui est une surface hélicoïdale (25a, 25b) et ladite seconde surface d'appui est une surface radiale plane (26a, 26b) de ladite rampe.

2. Dispositif selon la revendication 1, **caractérisé en ce que** ladite rampe annulaire (23a, 23b) comporte une encoche (30a, 30b) sur sa périphérie, à proximité de l'emplacement de la rampe où elle est la plus mince.

3. Dispositif selon la revendication 2, **caractérisé en ce que** ladite encoche (30a, 30b) a forme d'un secteur circulaire et **en ce que** sa profondeur est sensiblement égale à la largeur de la rampe (23a, 23b).

4. Dispositif selon l'une des revendications 1 à 3, **caractérisé en ce qu'il** comporte au moins deux galets d'extraction d'axes parallèles (Xa-Xa, Xb-Xb) et dont les secondes surfaces d'appui (26a, 26b) sont situées dans un même plan.

5. Dispositif selon la revendication 4, **caractérisé en ce qu'il** comporte au moins une position de repos dans laquelle les encoches (30a, 30b) de chacun des galets d'extraction (20a, 20b) se font face.

6. Dispositif selon l'une des revendications 1 à 3, **caractérisé en ce qu'il** comporte un galet d'extraction (20a) et au moins un galet de contre-appui d'axe (Y-Y) parallèle à l'axe dudit galet d'extraction, prévu pour fournir un appui à l'électrode (12) au moment de son extraction.

7. Dispositif selon l'une des revendications 1 à 3, **caractérisé en ce qu'il** comporte un galet d'extraction (20a) et au moins un galet de contre-appui (40) d'axe (Y-Y) orthogonal à l'axe dudit galet d'extraction, prévu pour fournir un appui à l'électrode (12) au moment de son extraction.

8. Procédé d'extraction d'une électrode (12) d'une pince à souder (9), ladite électrode étant fixée à une allonge d'extrémité (11) d'une mâchoire de la pince, faisant usage d'un dispositif selon la revendication 5, **caractérisé en ce qu'il** comporte les étapes suivantes :

    - mettre les galets d'extraction (20a, 20b) en position de repos,
    - engager entre lesdits galets d'extraction ladite électrode à séparer de son allonge de façon qu'elle prenne place dans lesdites encoches (30a, 30b), la gorge (13) entre la base (12c) de l'électrode et un épaulement (11c) de l'allonge étant située au niveau desdites encoches,
    - mettre en rotation lesdits galets de façon que les rampes annulaires (23a, 23b) respectives pénètrent dans ladite gorge, les surfaces radiales planes (26a, 26b) s'appliquant sur l'épaulement de ladite allonge et les surfaces hélicoïdales (25a, 25b) s'appliquant sur la base de ladite électrode.

9. Procédé d'extraction d'une électrode (12) d'une pince à souder (9), ladite électrode étant fixée à une allonge d'extrémité (11) d'une mâchoire de la pince, faisant usage d'un dispositif selon l'une des revendications 6 ou 7, **caractérisé en ce qu'il** comporte les étapes

**EP 2 700 468 A1**

suivantes :

- engager ladite électrode à séparer de son allonge entre ledit galet d'extraction (20a) et au moins un galet de contre-appui (40) de façon qu'elle prenne place dans l'encoche (30a), la gorge (13) entre la base (12c) de l'électrode et un épaulement (11c) de l'allonge étant située au niveau de ladite encoche,
- mettre en rotation ledit galet d'extraction de façon que la rampe annulaire (23a) pénètre dans la gorge, la surface radiale plane (26a) de la rampe s'appliquant sur l'épaulement de ladite allonge et la surface de came hélicoïdale (25a) s'appliquant sur la base de ladite électrode.

9

10a

11a

12a

FIG. 1

12b

11b

10b

10

11

13

11c

12c

14

12

FIG. 2

FIG. 3

FIG. 4A

FIG. 4B

FIG. 4C

FIG. 5

Europäisches
Patentamt

European
Patent Office

Office européen
des brevets

**RAPPORT DE RECHERCHE EUROPEENNE**

Numéro de la demande

EP 13 30 5969

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | DE 10 2010 061546 A1 (BAYERISCHE MOTOREN WERKE AG [DE]; HOCHSCHULE REGENSBURG [DE]) 28 juin 2012 (2012-06-28) | 1-6,8,9 | INV. B23K11/30 |
| Y | * alinéas [0053], [0056] - [0058], [0066] - [0070]; revendications 1,9,20 * ----- | 7 | |
| Y | DE 20 2012 000498 U1 (BAEKER REINHARD [DE]) 1 mars 2012 (2012-03-01) * figures 2-4 * ----- | 7 | |
| A | DE 299 14 968 U1 (KUKA SCHWEISSANLAGEN GMBH [DE]) 4 janvier 2001 (2001-01-04) * figures 1-4 * ----- | 1 | |

DOMAINES TECHNIQUES RECHERCHES (IPC)

B23K

Le présent rapport a été établi pour toutes les revendications

| Lieu de la recherche | Date d'achèvement de la recherche | Examinateur |
|---|---|---|
| Munich | 9 août 2013 | Hernanz, Sonsoles |

CATEGORIE DES DOCUMENTS CITES

X : particulièrement pertinent à lui seul
Y : particulièrement pertinent en combinaison avec un
   autre document de la même catégorie
A : arrière-plan technologique
O : divulgation non-écrite
P : document intercalaire

T : théorie ou principe à la base de l'invention
E : document de brevet antérieur, mais publié à la
   date de dépôt ou après cette date
D : cité dans la demande
L : cité pour d'autres raisons
 
& : membre de la même famille, document correspondant

EPO FORM 1503 03.82 (P04C02)

**EP 2 700 468 A1**

**ANNEXE AU RAPPORT DE RECHERCHE EUROPEENNE
RELATIF A LA DEMANDE DE BREVET EUROPEEN NO.**

EP 13 30 5969

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

09-08-2013

| Document brevet cité au rapport de recherche | Date de publication | Membre(s) de la famille de brevet(s) | Date de publication |
|---|---|---|---|
| DE 102010061546 A1 | 28-06-2012 | AUCUN | |
| DE 202012000498 U1 | 01-03-2012 | DE 202012000498 U1<br>EP 2617511 A1 | 01-03-2012<br>24-07-2013 |
| DE 29914968 U1 | 04-01-2001 | AUCUN | |

Pour tout renseignement concernant cette annexe : voir Journal Officiel de l'Office européen des brevets, No.12/82

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2870149

- FR 2921855